# FASCICULE DE BREVET EUROPEEN

(11) **EP 4 404 786 B1**
(45) Date de publication et mention de la délivrance du brevet: **18.12.2024**
(21) Numéro de dépôt: 22802220.8
(22) Date de dépôt: 24.10.2022
(51) Int. Cl.: A41D 19/00, B32B 3/16, B32B 3/18

(54) **MATÉRIAU RÉSISTANT AUX PIQÛRES D'AIGUILLES ET ARTICLE D'HABILLEMENT LE COMPORTANT**
NADELSTICHBESTÄNDIGES MATERIAL UND KLEIDUNGSSTÜCK DAMIT
NEEDLE-STICK RESISTANT MATERIAL AND GARMENT COMPRISING SAME

(30) Priorité: 25.10.2021 FR 2111329
(43) Date de publication de la demande: 31.07.2024
(73) Titulaire: Trius Safety, 11100 Narbonne (FR)
(72) Inventeur: GRIEU, Stéphane, 11200 CRUSCADES (FR); EL AZZOUZI, Mohammed, 34080 MONTPELLIER (FR)
(74) Mandataire: Ipside
(86) Numéro de dépôt international: PCT/FR2022/052011
(87) Numéro de publication internationale: WO 2023/073313

(56) Documents cités:
- WO-A1-2017/140908
- DE-A1- 19 707 375
- US-A- 5 601 895
- US-A1- 2018 326 698
- US-B1- 8 354 170

## Description

### Domaine technique de l'invention

La présente invention se rapporte à un matériau apte à protéger contre les piqûres d'aiguilles ainsi qu'à des articles d'habillement comportant un tel matériau.

La présente invention s'inscrit dans le domaine de la protection d'une partie d'un corps humain contre les risques de piqûres, notamment les piqûres de seringues. Un domaine d'application particulier de l'invention est la protection des mains contre les risques de piqûres, notamment faites par des aiguilles de seringues hypodermiques.

### Technique antérieure

Les gants de protection vendus dans le commerce sont principalement résistants aux coupures, aux perforations, à l'abrasion et/ou à la déchirure. Mais très peu de gants permettent une protection des mains contre les risques de piqûres d'aiguilles. Or, pour de nombreuses professions, telles que par exemple les agents d'entretien, les agents de centres de tri des déchets, les éboueurs, les horticulteurs de parcs publics, les risques accidentels de se faire piquer par une aiguille de seringue usagée sont très présents.

On peut citer, parmi les gants de protection commercialisés existants sur le marché permettant une protection des mains contre les risques de piqûres d'aiguilles, les gants de la marque HexArmor^{®}, qui utilise la technologie SuperFabric^{®}. Cependant, ces gants de protection présentent une certaine rigidité qui gêne la liberté de mouvement des doigts de la main d'un utilisateur. La manipulation d'objets avec de tels gants de protection est difficile, et leur utilisation se révèle au final peu confortable pour l'utilisateur. Les documents US 5 601 895 A et WO 2017/140908 A1 divulguent chacun un article d'habillement comportant un matériau comportant une superposition de trois couches, chacune des couches comportant une pluralité de plaquettes agencées de manière juxtaposée en formant un pavage, avec un jeu entre lesdites plaquettes, les trois couches sont superposées les unes sur les autres de sorte que les plaquettes d'une couche sont décalées par rapport aux plaquettes des autres couches de sorte à supprimer l'ensemble des lumières dans le matériau.

### Présentation de l'invention

La présente invention vise à remédier aux inconvénients des solutions proposées par l'art antérieur, notamment à ceux exposés ci-avant, en proposant un matériau capable d'assurer une protection très efficace contre les risques de piqûres d'aiguilles, tout en garantissant une souplesse lui permettant d'être utilisable dans la confection d'articles d'habillement de protection.

Par article d'habillement, on entend un article servant à couvrir une partie du corps humain. A titre d'exemples non limitatifs, un article d'habillement peut être un pantalon, une veste, un gant, un tablier, une chaussure.

A cet effet, il est proposé par la présente invention un matériau comportant une superposition d'au moins trois couches, une couche inférieure, au moins une couche intermédiaire et une couche supérieure, chacune des au moins trois couches comportant :
- une pluralité de plaquettes agencées de manière juxtaposée en formant un pavage, avec un jeu entre lesdites plaquettes,
- un moyen de liaison des plaquettes entre elles.

Les au moins trois couches sont préférentiellement distinctes les unes des autres. Le moyen de liaison des plaquettes d'une des au moins trois couches est préférentiellement distinct des moyens de liaison des plaquettes de chacune des autres couches.

Les au moins trois couches sont superposées les unes sur les autres de sorte que les plaquettes d'une couche sont décalées par rapport aux plaquettes des autres couches de sorte à supprimer l'ensemble des lumières dans le matériau.

En d'autres termes, les différentes couches du matériau sont superposées entre elles, en décalant les pavages des couches intermédiaires et supérieure les uns par rapport aux autres et par rapport au pavage de la couche inférieure de sorte à recouvrir l'ensemble du jeu entre les plaquettes formant le pavage de la couche inférieure.

Lorsque l'ensemble des couches du matériau est superposé, aucune lumière traversant l'épaisseur totale du matériau n'est visible. En d'autres termes, il n'y a pas de chemin vertical (c'est-à-dire dans l'épaisseur) traversant possible à travers le matériau.

La suppression des lumières dépend notamment des motifs des plaquettes formant le pavage, du jeu entre les plaquettes et la façon de superposer les plaquettes des différentes couches entre elles.

Le moyen de liaison d'une couche permet avantageusement de maintenir le jeu imposé entre les plaquettes de ladite couche. Un tel moyen de liaison permet également avantageusement d'apporter, à la couche associée, de la souplesse, et donc une flexibilité au matériau.

Un tel matériau, flexible, allie avantageusement protection, notamment à la piqûre d'aiguille, résistance, confort et dextérité.

Chaque plaquette de la couche supérieure comporte une surépaisseur locale au niveau d'une périphérie externe de la plaquette. Cette surépaisseur locale pour chaque plaquette de la couche supérieure permet avantageusement de bloquer la pénétration d'une aiguille de biais et glisser entre les couches. Ainsi, lorsqu'une aiguille arrive de biais sur une des plaquettes de la couche supérieure, la surépaisseur locale de ladite plaquette permet le blocage de l'aiguille au niveau de ladite plaquette et l'empêche ainsi de pénétrer de biais dans le matériau.

La surépaisseur est préférentiellement réalisée au niveau d'une face opposée à une face en regard d'une couche intermédiaire.

Dans des modes particuliers de réalisation, le matériau peut comporter en outre l'une ou plusieurs des caractéristiques suivantes, prises isolément ou selon toutes les combinaisons techniquement possibles.

Selon des modes de réalisation particuliers, le moyen de liaison d'une couche est un tissu et les plaquettes sont liées solidairement au tissu. De préférence, le moyen de liaison de toutes les couche est un tissu et les plaquettes de chaque couche sont liées solidairement au tissu.

Dans des formes particulières de réalisation, pour limiter avantageusement le décollement des plaquettes du tissu d'une couche, ledit tissu est emprisonné dans une épaisseur de l'ensemble des plaquettes de ladite couche.

Dans des exemples de réalisation préférés de l'invention, le tissu est un tulle.

Dans des modes de réalisation préférés de l'invention, pour interdire le glissement des couches les unes par rapport aux autres, les au moins trois couches sont solidaires fixement entre elles. Les au moins trois couches sont mécaniquement liées entre seules, sans degré de liberté.

De préférence, les au moins trois couches sont ponctuellement solidaires fixement entre elles.

Dans des exemples de réalisation préférés de l'invention, la couche inférieure comporte des plots disposés dans certaines plaquettes, et les autres couches comportent des orifices de réception desdits plots.

De préférence, les plaquettes de chaque couche formant le matériau comportent une surépaisseur locale au niveau d'une périphérie externe de la plaquette.

Dans des exemples de réalisation préférés de l'invention, les plaquettes d'une couche se présentent sous la forme géométrique de trois hexagones assemblés entre eux chacun au niveau de deux bords adjacents. Un pavage formé par de telles plaquettes présente l'avantage de ne présenter aucun axe privilégié de faiblesse. Un matériau comportant au moins une couche avec un tel pavage s'avère avantageusement résistant à la coupure.

De préférence, toutes les couches du matériau comportent le même pavage. Dans des modes de réalisation préférés de l'invention, les plaquettes des couches sont réalisées par impression 3D. L'impression 3D offre avantageusement la possibilité de créer des motifs de plaquettes de différentes formes, de petite dimension. Par petite dimension, on entend des motifs s'inscrivant dans un cercle de diamètre de l'ordre du centimètre.

L'invention est également relative à un article d'habillement comportant un matériau conforme à au moins l'un de ses modes de réalisation. Le matériau peut former un insert dans l'article d'habillement, et est généralement disposé entre une couche interne, dite doublure, destinée à être en vis-à-vis d'une partie du corps d'un utilisateur, et une couche externe, dite revêtement extérieur.

Le matériau peut se présenter sous la forme d'une seule pièce ou de plusieurs pièces indépendantes les unes des autres, disposées dans une ou plusieurs parties de l'article d'habillement, correspondant à une ou plusieurs zones du corps de l'utilisateur devant être protégées par le matériau.

De préférence, le couche interne et/ou la couche externe de l'article d'habillement est un textile. Le matériau est préférentiellement assemblé par couture à la couche interne et/ou à la couche externe de l'article d'habillement.

Dans des modes particuliers de réalisation, l'article est réalisé sous la forme d'un gant de protection. Un tel gant peut être utilisé par des utilisateurs ayant besoin de porter des gants résistants aux piqûres d'aiguilles tout en conservant une dextérité manuelle et une sensibilité tactile adéquates.

### Brève description des figures

L'invention sera mieux comprise à la lecture de la description suivante, donnée à titre d'exemple nullement limitatif, et faite en se référant aux figures suivantes :
[Fig. 1] représente une vue en perspective d'un matériau selon un mode de réalisation de l'invention ;
[Fig. 2] représente une photographie d'une couche d'un matériau selon un mode de réalisation de l'invention ;
[Fig. 3] représente de manière schématique les trois étapes de superposition de trois couches d'un matériau pour supprimer les lumières ;
[Fig. 4] représente une vue de dessus d'un matériau à trois couches superposées ; [Fig. 5] représente une vue en perspective d'une couche inférieure du matériau, illustrant les plots ;
[Fig. 6] représente une vue de dessus d'une couche supérieure du matériau illustrant les orifices traversants complémentaires des plots de la couche inférieure de la figure 5 ;
[Fig. 7] représente une vue en perspective d'une couche du matériau, par exemple la couche supérieure, illustrant le moyen de liaison des plaquettes de la couche et la surépaisseur locale sur les plaquettes ;
[Fig. 8] représente de manière schématique un gant comportant un matériau conforme à l'invention.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

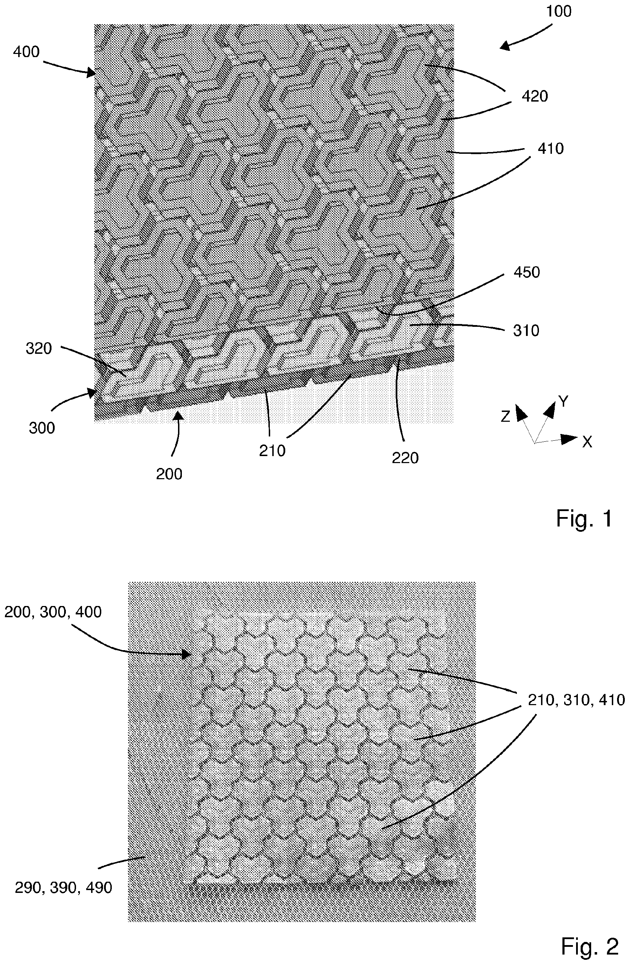

Un exemple de matériau 100 conforme à la présente invention est à présent décrit et illustré sur les figures 1 à 7. Le matériau 100 est un matériau multicouches pour la protection contre les piqûres d'aiguilles, notamment les piqûres d'aiguilles de seringues hypodermiques.

Le matériau 100 se présente sous la forme d'au moins trois couches superposées : une couche inférieure 200, une couche supérieure 400 et au moins une couche intermédiaire 300.

Dans la suite de la description, le matériau 100 est décrit et illustré, de manière non limitative, dans une configuration préférée de réalisation où il comporte trois couches : une couche inférieure 200, une couche intermédiaire 300 et une couche supérieure 400, comme illustré sur la figure 1. Lorsque le matériau 100 comporte plusieurs couches intermédiaires, celles-ci sont préférentiellement identiques entre elles.

Chaque couche 200, 300, 400 du matériau 100 comporte, comme illustré à titre non limitatif sur la photographie de la figure 2 :
- une pluralité de plaquettes 210, 310, 410 agencées de manière juxtaposée en formant un pavage, avec un jeu entre lesdites plaquettes,
- un moyen de liaison 290, 390, 490 des plaquettes 210, 310, 410 entre elles.

Les trois couches sont préférentiellement distinctes les unes des autres. Les moyens de liaison des plaquettes de chaque couche sont préférentiellement distincts les uns des autres.

Pour chaque couche 200, 300, 400, les plaquettes 210, 310, 410 sont disposées les unes à côté des autres, sur un même plan, sans se superposer, en laissant un espace défini entre elles, de telle sorte que les plaquettes 210, 310, 410 constituent un pavage régulier ou semi-régulier.

Les plaquettes 210, 310, 410 d'une couche 200, 300, 400 présentent préférentiellement une même épaisseur. L'épaisseur d'une plaquette 210, 310, 410 représente la dimension qui est perpendiculaire au plan. Les plaquettes 210, 310, 410 de chaque couche 200, 300, 400 du matériau 100 présentent de préférence une même épaisseur. Les plaquettes 210, 310, 410 de chaque couche 200, 300, 400 du matériau 100 présentent de préférence une épaisseur d'au moins 0,5mm. Le jeu entre les plaquettes 210, 310, 410 d'une couche 200, 300, 400 est de préférence un jeu régulier, comme illustré sur la figure 2. Par jeu régulier, on entend que l'espace entre deux plaquettes adjacentes est constant et identique pour toute la couche.

De préférence, le jeu entre les plaquettes 210, 310, 410 d'une couche 200, 300, 400 est au moins égal au double de l'épaisseur des plaquettes, permettant ainsi de plier ladite couche et de contribuer avantageusement à la souplesse du matériau 100 la comportant.

Dans un mode de réalisation préféré, comme illustré sur la figure 1, chaque couche 200, 300, 400 du matériau 100 présente un même pavage. Un tel mode de réalisation présente un avantage en termes de réalisation du matériau 100, les couches superposées étant identiques, le matériau 100 est plus rapide à réaliser. Dans un autre mode de réalisation, au moins une couche présente un pavage différent.

Dans une configuration préférée de réalisation, comme illustré sur la figure 2, les plaquettes 210, 310, 410 d'une couche 200, 300, 400 du matériau 100 présentent toutes un même motif, formant le motif de base. Le pavage obtenu par la juxtaposition de ces plaquettes est dit pavage régulier.

Dans un exemple non limitatif de réalisation, le motif de base est un polygone régulier tel qu'un triangle, un carré, un hexagone, un losange.

Dans une autre configuration de réalisation, les plaquettes 210, 310, 410 d'une couche 200, 300, 400 présentent au moins deux motifs différents, lesdits au moins deux motifs différents formant le motif de base. Le pavage obtenu par la juxtaposition de ces plaquettes est dit pavage semi-régulier.

Dans un exemple de réalisation, un motif de base est constitué par deux polygones, tel qu'un hexagone et un losange.

Dans un mode préféré de réalisation du matériau 100, illustré sur les figures 1 et 2, le matériau 100 comporte trois couches 200, 300, 400. Chaque couche du matériau 100 présente un pavage régulier identique, avec le même motif de base. Le motif de base se présente sous la forme géométrique globale de trois hexagones assemblés deux à deux entre eux. Chaque hexagone est accolé aux deux autres hexagones au niveau de deux bords adjacents. Ce motif de base est dénommé Tri-Hex^{®}. Un pavage à base d'un tel motif de base présente l'avantage, au contraire d'un pavage à base d'un motif de base carré, de ne présenter aucun axe privilégié de faiblesse, et donc d'être résistant à la coupure.

Selon l'invention, les couches 200, 300, 400 formant le matériau 100 sont superposées les unes sur les autres de sorte que toutes les plaquettes 210, 310, 410 d'une couche 200, 300, 400 sont décalées par rapport aux plaquettes des autres couches de sorte à supprimer l'ensemble des lumières dans le matériau 100. Une lumière correspond à une ouverture traversante dans le matériau 100, transversalement à l'épaisseur totale dudit matériau, sans rencontrer de plaquettes d'aucune des couches le constituant. Cette ouverture est dite lumière car elle permet entre autres le passage de la lumière.

En d'autres termes, les différentes couches 200, 300, 400 du matériau 100 sont superposées entre elles, en décalant les pavages des couches intermédiaire 300 et supérieure 400 par rapport à la couche inférieure 200 de sorte à recouvrir l'ensemble du jeu entre les plaquettes formant le pavage de la couche inférieure 200.

Le pavage de la couche intermédiaire 300 est ainsi décalé par rapport au pavage de la couche inférieure 200 de sorte à recouvrir une partie du jeu entre les plaquettes 210 formant le pavage de la couche inférieure 200. Puis le pavage de la couche supérieure 400 est décalé par rapport aux pavages de la couche intermédiaire 300 et de la couche inférieure 200 de sorte à recouvrir le restant du jeu entre les plaquettes 210 formant le pavage de la couche inférieure 200. Lorsque les trois couches 200, 300, 400 sont superposées, aucune ouverture traversant l'épaisseur totale du matériau 100 n'est visible.

Le décalage du pavage d'une couche par rapport à une autre couche est un décalage du pavage de la couche dans son plan, parallèlement au plan du pavage de ladite autre couche. Le décalage peut être réalisé par translation et/ou par rotation.

L'homme du métier est en mesure de déterminer le décalage nécessaire des pavages des couches intermédiaire et supérieure, selon le motif des pavages et le jeu entre les pavages, pour combler l'ensemble des lumières du matériau 100.

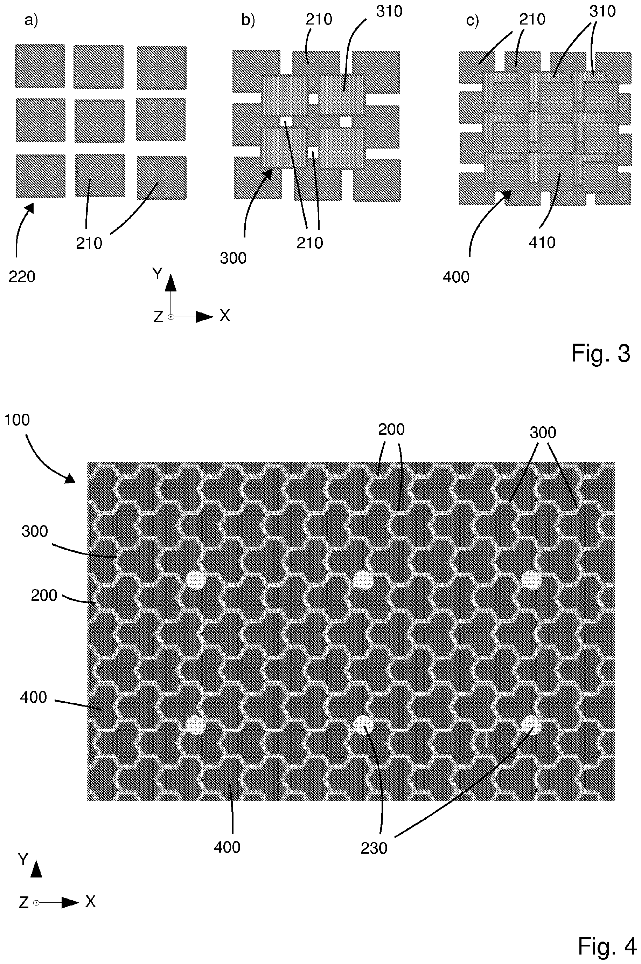

La figure 3 illustre un exemple simplifié de superposition de trois couches 200, 300, 400, chaque couche comportant un pavage réalisé avec des plaquettes identiques, à motif carré. L'image a) de la figure 3 illustre le pavage de la couche inférieure 200, avec neuf plaquettes 210. L'image b) de la figure 3 illustre le positionnement d'une partie de la couche intermédiaire 300 sur la couche inférieure 200. Le pavage de la couche intermédiaire 300, représenté partiellement par quatre plaquettes 310, est décalé en X et en Y, de sorte à recouvrir une partie du jeu entre les plaquettes formant le pavage de la couche inférieure 200. Des lumières 700, ici de forme carrée, sont encore visibles. L'image c) de la figure 3 illustre le positionnement d'une partie de la couche supérieure 400 sur la couche intermédiaire 300. Le pavage de la couche supérieure 400, représenté partiellement par neuf plaquettes 410, est décalé en X et en Y de sorte à recouvrir les lumières restantes, c'est à dire la partie restante visible du jeu entre les plaquettes 210 formant le pavage de la couche inférieure 200, après le positionnement de la couche intermédiaire 300.

La figure 4 illustre une vue de dessus d'un exemple de matériau 100 avec une superposition de trois couches, chaque couche comportant un pavage réalisé avec des plaquettes identiques, à motif tri-Hex^{®}. Dans cet exemple non limitatif, les plaquettes de chaque couche sont inscrites dans un cercle de 6 mm de diamètre, ont une épaisseur de 0,5 mm, et le jeu entre les plaquettes est de 1 mm. Les parties en noir représentent la couche supérieure 400, les parties en gris représentent la couche intermédiaire 300 et les parties en gris clair représente la couche inférieure 200. Les zones du matériau 100 où, en épaisseur, il n'y a qu'une seule couche représente 16% du total en surface, celles où il y a deux couches représentent 40% du total de la surface et celles où il y a trois couches représentent 44% du total de la surface.

Dans un mode préféré de réalisation, pour empêcher le glissement des couches 200, 300, 400 du matériau 100 entre elles, et ainsi éviter le décalage entre les couches qui créerait des lumières, les trois couches sont solidaires fixement entre elles.

Par solidaires fixement entre elles, on entend que les trois couches 200, 300, 400 sont reliées mécaniquement les unes aux autres, sans aucun degré de liberté.

Dans un exemple de réalisation, les couches 200, 300, 400 du matériau 100 sont enduites ensemble par un revêtement protecteur. L'enduction consiste en une étape d'application du revêtement protecteur sous forme liquide puis en une étape de séchage.

De préférence, les trois couches 200, 300, 400 sont ponctuellement solidaires fixement entre elles.

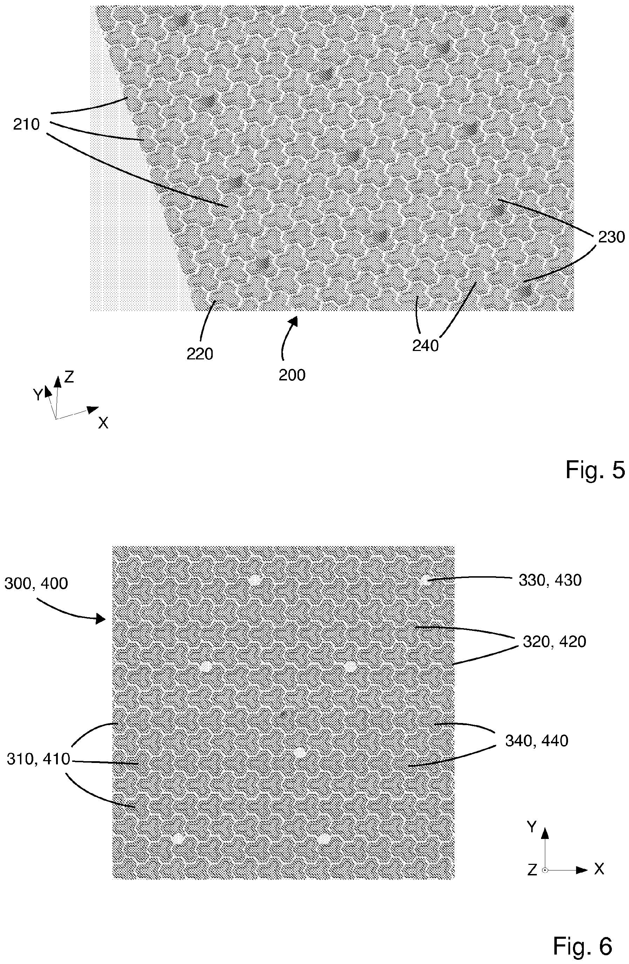

Dans un exemple préféré de réalisation, la couche inférieure 200 comporte des plots 230 disposés sur certaines plaquettes 210, comme illustré sur la figure 5. Les plots 230 s'étendent depuis une face, dite première face 240, située en regard de la couche intermédiaire 300. Les plots 230 sont dimensionnés en longueur pour être supérieur à la somme de l'épaisseur de la couche intermédiaire 300 et l'épaisseur de la couche supérieure 400. Il est clair que lorsque l'on parle d'épaisseur d'une couche, quelle qu'elle soit, on comprend qu'il s'agit de l'épaisseur des plaquettes de ladite couche. Les plots 230 de la couche inférieure 200 sont également visibles sur la vue de dessus du matériau 100 de la figure 4.

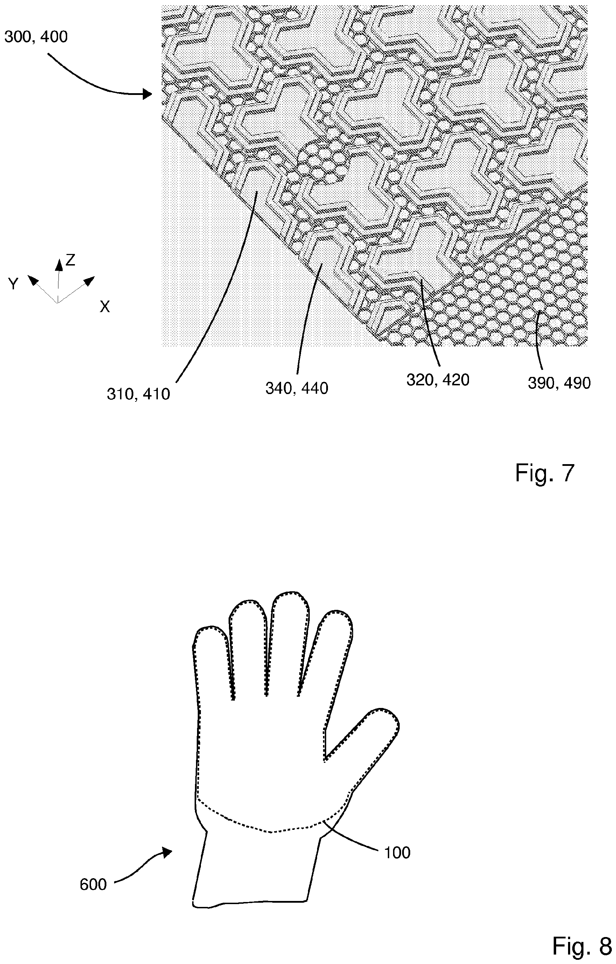

La couche intermédiaire 300 et la couche supérieure 400 comportent quant à elles des orifices traversants 330, 430 de réception desdits plots, comme illustré sur les figures 6 et 7. Les orifices traversants 330, 430 sont agencés sur les deux autres couches 300, 400, de telle sorte que lorsque les trois couches 200, 300, 400 sont superposées les unes sur les autres, chaque plot 230 de la couche inférieure 200 traverse un orifice traversant 330, 430 de chacune des autres couches 300, 400. Les orifices traversants 330, 430 ne sont donc pas nécessairement situés dans une plaquette 310, 320 mais peuvent se trouver à cheval sur deux plaquettes adjacentes d'une couche, comme illustré sur les figures 6 et 7.

Les plots 230 de la couche inférieure 200 sont verrouillés au niveau de leurs extrémités libres pour empêcher le retrait des couches. Dans un exemple de réalisation, les extrémités libres des plots 230 sont soudées aux plaquettes 410 de la couche supérieure 400.

Dans un mode préféré de réalisation, comme illustré à titre d'exemple sur la figure 1, chaque plaquette 410 de la couche supérieure 400 comporte une surépaisseur locale 420 au niveau d'une périphérie externe de la plaquette, par exemple à la périphérie externe de la plaquette. La surépaisseur locale 420 s'étend préférentiellement depuis une face de la plaquette, dite première face 440, opposée à une face, dite seconde face 450, située en regard de la couche intermédiaire 300. Une telle surépaisseur locale 420 permet avantageusement de bloquer la pénétration d'une aiguille de manière oblique, c'est-à-dire avec un angle par rapport au plan, par glissement entre les plaquettes des trois couches. Cette surépaisseur locale 420 forme un rempart contre le passage d'une aiguille lorsqu'elle arrive de biais sur la couche supérieure 400, notamment lorsqu'elle arrive de biais sur une des plaquettes de la couche supérieure 400. Ainsi, lorsqu'une aiguille arrive de biais sur une des plaquettes de la couche supérieure 400, la surépaisseur locale 420 de ladite plaquette bloque l'aiguille au niveau de ladite plaquette et l'empêche ainsi de glisser sur ladite plaquette et de pénétrer de biais dans le matériau, via le jeu entre les plaquettes.

Dans l'exemple préféré décrit ci-dessus où les plaquettes de chaque couche du matériau 100, en motif tri-Hex^{®}, sont inscrites dans un cercle de l'ordre de 6 mm de diamètre, et ont une épaisseur de l'ordre de 0,5 mm, la surépaisseur locale est de l'ordre de 0,4mm.

De préférence, les plaquettes 210, 310, 410 de chaque couche 200, 300, 400 du matériau 100 comportent une surépaisseur locale 220, 320, 420 au niveau de leur périphérie externe, s'étendant depuis une des faces desdites plaquettes. Dans l'exemple de la figure 1, la surépaisseur locale 220 des plaquettes 210 de la couche inférieure 200 s'étend depuis la première face 240 desdites plaquettes, la surépaisseur locale 320 des plaquettes 310 de la couche intermédiaire 300 s'étend depuis une première face 340 desdites plaquettes, située en regard de la couche supérieure 400, et la surépaisseur locale 420 des plaquettes 410 de la couche supérieure 400 s'étend depuis la première face 440 desdites plaquettes.

Les plaquettes 210, 310, 410 de chaque couche 200, 300, 400 sont avantageusement réalisées dans un matériau dur et rigide.

De préférence, les plaquettes 210, 310, 410 sont préférentiellement réalisées par une technique de fabrication additive, notamment par impression 3D. L'impression 3D est une technologie de fabrication additive où un objet est créé par dépôt successif de couches de matériau. L'impression 3D offre la possibilité de créer toute forme souhaitée pour les motifs des plaquettes.

Le matériau utilisé pour l'impression 3D des plaquettes 210, 310, 410 est préférentiellement choisi parmi l'ABS (Acrylonitrile Butadiène Styrène), le PLA (Acide Polylactique), le Nylon, ou tout autre matériau approprié pour l'impression 3D (plastique ou métallique).

De manière plus préférentielle, le matériau utilisé pour la réalisation des plaquettes 210, 310, 410 est le PLA car il présente l'avantage d'être peu onéreux, facile d'impression, résistant à la traction et biodégradable. De plus, une plaquette en PLA, d'épaisseur 0,5 mm, résiste à une force de pénétration de 10 N, avec des aiguilles de jauges comprises entre 26G (0,45 mm de diamètre) et 18G (0,45 mm de diamètre). Une plaquette en PLA, d'épaisseur 0,8 mm, résiste à une force de pénétration de 20 N, avec des aiguilles de jauges comprises entre 26G et 18G. La mesure de la force de pénétration a été réalisée selon les tests requis par la norme américaine ASTM F2878.

Le nylon est également un matériau préféré car il possède une bonne souplesse. De plus, une plaquette en nylon, d'épaisseur 0,8 mm, résiste à une force de pénétration de 15 N, avec des aiguilles de jauges comprises entre 26G et 18G. D'autres techniques de fabrication sont également possibles pour la réalisation des plaquettes, telles que l'usinage ou le moulage par injection, par exemple, selon les dimensions souhaitées pour les plaquettes.

Comme décrit précédemment, chaque couche 200, 300, 400 du matériau 100 comporte en outre un moyen de liaison 290, 390, 490 des plaquettes entre elles. Le moyen de liaison 290, 390, 490 permet de maintenir le jeu imposé entre les plaquettes de la couche associée. Un tel moyen de liaison 290, 390, 490 est également avantageusement destiné à apporter de la souplesse à la couche associée, et donc une flexibilité au matériau 100.

Dans un exemple de réalisation, lorsque les plaquettes 210, 310, 410 d'une couche 200, 300, 400 sont réalisées par impression 3D, le moyen de liaison 290, 390, 490 peut être des liaisons entre lesdites plaquettes, reliant deux plaquettes entre elles, de fine épaisseur, réalisées elles aussi par impression 3D, lors de la réalisation du pavage de la couche. De préférence, le matériau pour la réalisation des plaquettes et le moyen de liaison entre les plaquettes est le nylon, car il apporte une souplesse à la couche.

Il est également possible, avec l'impression 3D, d'imprimer une couche avec deux matériaux différents, un matériau pour les plaquettes et un matériau pour le moyen de liaison. Le matériau choisi pour le moyen de liaison 290, 390, 490 présente une plus grande souplesse que le matériau choisi pour les plaquettes 210, 210, 410, permettant les mouvements entre lesdites plaquettes tout en les maintenant à la bonne distance, et le matériau choisi pour les plaquettes 210, 310, 410 présente une plus grande rigidité que le matériau choisi pour le moyen de liaison 290, 390, 490, assurant la protection contre les piqûres d'aiguilles. Le matériau 100 obtenu est alors un matériau composite, obtenu par association de plusieurs matériaux. Dans un autre exemple de réalisation, le moyen de liaison 290, 390, 490 est un tissu et les plaquettes 210, 310, 410 sont liées solidairement au tissu. Le matériau 100 obtenu est alors un matériau composite, obtenu par association de plusieurs matériaux.

Dans une forme de réalisation, les plaquettes 210, 310, 410 reposent fixement sur le tissu, par exemple par collage ou thermocollage.

Dans une forme préférée de réalisation, l'ensemble des plaquettes formant le pavage d'une couche emprisonnent, dans leur épaisseur, le tissu. Une telle forme de réalisation limite avantageusement le décollement des plaquettes du tissu. Lorsque les plaquettes 210, 310, 410 d'une couche 200, 300, 400 sont par exemple réalisées par une impression 3D, l'impression est arrêtée en cours de réalisation des plaquettes, par exemple à mi-épaisseur des plaquettes, le tissu est placé sur la strate en cours des plaquettes, puis l'impression est relancée jusqu'à la réalisation complète des plaquettes.

Dans un exemple de réalisation de tissu, comme illustré sur la figure 2, le tissu 290, 390, 490 peut être un tulle. Pour rappel, le tulle est un tissu léger et transparent, par exemple en coton, lin, laine, soie ou en fibres synthétiques, telles que le polyester, formé par un réseau de mailles régulières de fils fins.

Dans d'autres exemple de réalisation du tissu, le tissu peut être un tissu ajouré (c'est-à-dire présentant des parties évidées), tel que par exemple un voile, un tissu organza, un tissu tarlatane...

Le matériau 100 selon l'invention peut être avantageusement utilisé dans un article d'habillement 600, comme doublure, pour protéger une partie du corps humain.

Un domaine d'application préféré pour l'utilisation du matériau 100 conforme à l'invention est la protection des mains contre les piqûres d'aiguilles, via un gant. Ce domaine d'application n'est pas restrictif de l'invention, et le matériau 100 peut être utilisé dans tout article d'habillement, en matériau textile, cuir ou en polymère nécessitant une protection locale ou totale contre les piqûres d'aiguilles, tel que par exemple une veste ou un pantalon. Le matériau 100 peut également être utilisé au niveau d'une semelle de chaussure.

L'épaisseur totale du matériau 100 dépend de l'application finale. Cette épaisseur totale est sensiblement équivalente à la somme des épaisseurs des différentes couches le constituant.

De préférence, lorsque le matériau 100 est destiné à une utilisation dans un article d'habillement tel qu'un gant, il est préférable que son épaisseur totale ne dépasse pas 3mm, pour garantir sa dextérité, son confort, sa souplesse et sa légèreté. De même, il est préférable que le motif des plaquettes soit inscrit dans un cercle de diamètre inférieur à 10mm.

Le matériau 100 peut présenter une épaisseur totale plus importante, lorsqu'il est destiné à intégrer par exemple dans une semelle de chaussure, ou encore un article d'habillement qui ne nécessite pas autant de souplesse/dextérité que pour le gant, tel qu'une veste.

Des tests de résistance à la coupure et à la piqûre d'aiguilles ont été réalisés sur deux types d'insert à titre comparatif, en vue d'une utilisation dans un gant. Les tests de résistance à la coupure ont été réalisés selon la norme européenne et française NF EN 388 : 2016 des gants de protection contre les risques mécaniques. Le test de résistance à la piqûre d'aiguilles a été réalisé selon la norme américaine ASTM F2878 car la norme NF EN 388 : 2016 ne propose pas encore ce type de test. Les deux inserts sont :
- échantillon A : le matériau 100 conforme à l'invention : trois couches, le motif des plaquettes est de type TRIHEX^{®} est inscrit dans un cercle de 4mm de rayon, présente une épaisseur de 0,7mm, avec un jeu entre plaquettes de 1.0mm, les plaquettes de chaque couche sont réalisées par impression 3D avec du PLA, et avec une tulle polyamide emprisonnée dans les plaquettes de chaque couche ; une couche de cuir de chèvre simule une enveloppe extérieure de 0,8 mm d'épaisseur.
- échantillon B : le gant SHARPMASTER 9014 UVEX de la société HEXARMOR, comportant trois couches de SUPERFABRIC^{™}.

Le gant de l'échantillon B est l'un des gants le plus performants actuellement sur le marché.

Les résultats des tests sont illustrés dans le tableau ci-dessous :

**[Table 1]**

| | Performance | |
|---|---|---|
| | Coupure TDM (en Newtons) | Piqûre ASTM F2878-10 (en Newtons) |
| Echantillon A | > 100 | 20,27 |
| Echantillon B | 70,2 | 10,279 |

La résistance à la coupure est déterminée selon la norme ISO : 13997. Le test, appelé test coupure TDM (acronyme de Tomodynamomètre) détermine la force appliquée à une lame sur l'échantillon pour le trancher. Plus la force nécessaire pour trancher l'échantillon est élevée, plus sa résistance à la coupure est forte. Ce test permet de catégoriser des gants à très haute résistance. Le test a été réalisé sur cinq exemplaires de chaque échantillon. La moyenne sur les cinq mesures par échantillon est répertoriée dans le tableau 1.

La résistance à la piqûre d'aiguilles est déterminée par la norme ASTM F2878-10. Le test détermine la force nécessaire pour percer l'échantillon avec une aiguille de jauge 25. Plus la force nécessaire pour percer l'échantillon est élevée, plus sa résistance à la piqûre d'aiguilles est forte. Le test a été réalisé sur trois exemplaires de chaque échantillon, quatre mesures par exemplaire. La moyenne sur les douze mesures par échantillon est répertoriée dans le tableau 1.

Aucune perforation sur les échantillons A n'a été relevée.

Des perforations sur les échantillons B ont été relevées.

Les tests, tant en termes de résistance à la coupure à la piqûre d'aiguilles, permettent de constater que l'échantillon A présente des performances supérieures à celles de l'échantillon B.

Un gant, ou tout autre article d'habillement, comportant le matériau 100 selon l'invention, par exemple sous la forme d'insert, présenterait un gain en performance non négligeable en termes de protection, notamment au niveau de la résistance à la piqûre d'aiguilles, pour son utilisateur.

La figure 8 illustre l'exemple de l'utilisation du matériau 100 conforme à l'invention dans un gant 600. Le gant 600 représenté sur la figure 8 est destiné, de manière non restrictive, pour une main droite. Le matériau 100 est représenté en ligne pointillée car non visible depuis l'extérieur de gant.

Le matériau 100 peut être assemblé à tout type de gant. Le matériau 100 peut y être assemblé par couture ou par collage. Le matériau 100 peut recouvrir tout ou partie du gant 600.

Lorsque le matériau 100 ne recouvre pas la totalité du gant, le gant peut comporter plusieurs pièces de matériau 100, disposées au niveau de zones spécifiques de la main de l'utilisation nécessitant d'être spécifiquement protégées, par exemple les extrémités des doigts.

Le matériau 100 peut par exemple être intégré en tant qu'insert dans le gant, c'est à dire positionné entre un revêtement extérieur, côté environnement extérieur, et une doublure, côté main.

Le matériau 100 peut également être placé sur un gant textile (ou à l'intérieur du gant textile), puis enduit ensemble par un revêtement protecteur.

Le matériau 100 peut également être placé entre un gant tricoté et une semelle de renforcement, par exemple en cuir.

Dans un exemple de fabrication d'un gant, le matériau 100 peut être découpé sous la forme d'une main, côté paume de la main par exemple, et être fixé à des coques, en forme de dés à coudre, destinées à recevoir chacune une extrémité d'un doigt de la main. Les coques sont préférentiellement réalisées en impression 3D dans un matériau configuré pour résister à la piqûre. Une doublure est fixée solidairement au matériau 100, la doublure étant destinée à venir contre la paume de la main pour améliorer le confort de l'utilisateur. Puis l'ensemble matériau 100 / coques / doublure est enfilé dans un gant, formant revêtement extérieur, en cuir en en matière enduite par exemple. Le matériau est intercalé entre le gant externe et la doublure. Les coques, lorsque l'ensemble est dans le gant, ont une dimension telle qu'elles sont avantageusement maintenues par friction avec les extrémités des doigts du gant. Les coques, solidaires du matériau, permettent un enfilage facile du matériau dans le gant. Lorsque l'utilisateur met le gant, les extrémités de ses doigts se positionnent simplement dans les coques et la paume de la main est vis-à-vis de la doublure. Un tel gant 600, avec le matériau selon l'invention, et quel que soit son mode de fabrication, peut être utilisé par de nombreux travailleurs, notamment ceux dans la collecte et le tri des déchets, les horticulteurs de jardins publics...

La description ci-avant illustre clairement que, par ses différentes caractéristiques et leurs avantage, la présente invention atteint les objectifs qu'elle s'était fixé. En particulier, la présente invention permet d'obtenir un matériau résistant aux piqûres d'aiguilles tout en garantissant une souplesse.

## Revendications

1. Matériau (100) comportant une superposition d'au moins trois couches, une couche inférieure (200), au moins une couche intermédiaire (300) et une couche supérieure (400), chacune des au moins trois couches (200, 300, 400) comportant :
- une pluralité de plaquettes (210, 310, 410) agencées de manière juxtaposée en formant un pavage, avec un jeu entre lesdites plaquettes,
- un moyen de liaison (290, 390, 490) des plaquettes entre elles,
les au moins trois couches (200, 300, 400) étant superposées les unes sur les autres de sorte que les plaquettes d'une couche sont décalées par rapport aux plaquettes des autres couches de sorte à supprimer l'ensemble des lumières dans le matériau (100),
**caractérisé en ce que** chaque plaquette (410) de la couche supérieure (400) comporte une surépaisseur locale (420) au niveau d'une périphérie externe de ladite plaquette.

2. Matériau (100) selon la revendication 1 dans lequel, pour une couche (200, 300, 400), le moyen de liaison (290, 390, 490) est un tissu et les plaquettes (210, 310, 410) sont liées solidairement au tissu.

3. Matériau (100) selon la revendication précédente dans lequel le tissu est emprisonné dans une épaisseur de l'ensemble des plaquettes.

4. Matériau (100) selon l'une des revendications précédentes dans lequel les au moins trois couches (200, 300, 400) sont solidaires fixement entre elles.

5. Matériau (100) selon la revendication précédente dans lequel la couche inférieure (200) comporte des plots (230) disposés dans certaines plaquettes (210), et les autres couches (300, 400) comportent des orifices traversants (330, 430) de réception desdits plots.

6. Matériau (100) selon l'une des revendications précédentes dans lequel les plaquettes (210, 310, 410) d'une couche (200, 300, 400) se présentent sous la forme géométrique de trois hexagones assemblés entre eux chacun au niveau de deux bords adjacents.

7. Matériau (100) selon l'une des revendications précédentes dans lequel les plaquettes (210, 310, 410) des au moins trois couches (200, 300, 400) sont réalisées par impression 3D.

8. Article d'habillement (600) comportant un matériau (100) selon l'une des revendications précédentes.

## Patentansprüche

1. Material (100), das eine Überlagerung von mindestens drei Schichten, einer unteren Schicht (200), mindestens einer Zwischenschicht (300) und einer oberen Schicht (400), umfasst, wobei jede der mindestens drei Schichten (200, 300, 400) Folgendes umfasst:
- eine Vielzahl von Plättchen (210, 310, 410), die nebeneinander angeordnet sind und eine Pflasterung bilden, mit einem Abstand zwischen den Plättchen bilden,
- ein Mittel zum Verbinden (290, 390, 490) der Plättchen miteinander,
wobei die mindestens drei Schichten (200, 300, 400) so übereinander gelegt werden, dass die Plättchen einer Schicht relativ zu den Plättchen der anderen Schichten versetzt sind, um alle Öffnungen im Material (100) zu beseitigen,
**dadurch gekennzeichnet, dass** jedes Plättchen (410) der oberen Schicht (400) eine lokale Überdicke (420) an einem Außenumfang der Plättchen umfasst.

2. Material (100) nach Anspruch 1, wobei für eine Schicht (200, 300, 400) das Verbindungsmittel (290, 390, 490) ein Gewebematerial ist und die Plättchen (210, 310, 410) einstückig mit dem Gewebematerial verbunden sind.

3. Material (100) nach dem vorhergehenden Anspruch, wobei das Gewebematerial in einer Dicke aller Plättchen eingeschlossen ist.

4. Material (100) nach einem der vorhergehenden Ansprüche, wobei die mindestens drei Schichten (200, 300, 400) fest miteinander verbunden sind.

5. Material (100) nach dem vorhergehenden Anspruch, wobei die untere Schicht (200) Polster (230) umfasst, die in bestimmten Plättchen (210) angeordnet sind, und die anderen Schichten (300, 400) Durchgangsöffnungen (330, 430) zum Aufnehmen der Polster umfassen.

6. Material (100) nach einem der vorhergehenden Ansprüche, wobei die Plättchen (210, 310, 410) einer Schicht (200, 300, 400) die geometrische Form von drei Sechsecken aufweisen, die jeweils an zwei benachbarten Kanten miteinander verbunden sind.

7. Material (100) nach einem der vorhergehenden Ansprüche, wobei die Plättchen (210, 310, 410) der mindestens drei Schichten (200, 300, 400) durch 3D-Druck hergestellt sind.

8. Bekleidungsstück (600), das ein Material (100) nach einem der vorhergehenden Ansprüche umfasst.

## Claims

1. Material (100) comprising a superposition of at least three layers, a lower layer (200), at least one intermediate layer (300) and an upper layer (400), each of the at least three layers (200, 300, 400) comprising:
- a plurality of platelets (210, 310, 410) arranged in a juxtaposed manner while forming a paving, with a clearance between said platelets,
- means (290, 390, 490) for connecting the platelets together,
the at least three layers (200, 300, 400) being superposed on one another so that the platelets of one layer are offset with respect to the platelets of the other layers so as to remove all openings in the material (100),
**characterized in that** each platelet (410) of the upper layer (400) includes a local thickening (420) at the level of an outer periphery of said platelet.

2. Material (100) according to claim 1, wherein, for one layer (200, 300, 400), the connecting means (290, 390, 490) is a fabric and the platelets (210, 310, 410) are securely bonded to the fabric.

3. Material (100) according to the preceding claim, wherein the fabric is trapped within a thickness of the set of platelets.

4. Material (100) according to one of the preceding claims, wherein the at least three layers (200, 300, 400) are fixedly secured together.

5. Material (100) according to the preceding claim, wherein the lower layer (200) includes studs (230) arranged in some platelets (210), and the other layers (300, 400) include through orifices (330, 430) for receiving said studs.

6. Material (100) according to one of the preceding claims, wherein the platelets (210, 310, 410) of a layer (200, 300, 400) are geometrically shaped as three hexagons joined together each at the level of two adjacent edges.

7. Material (100) according to one of the preceding claims, wherein the platelets (210, 310, 410) of the at least three layers (200, 300, 400) are made by 3D printing.

8. Garment (600) including a material (100) according to one of the preceding claims.
